# EUROPEAN PATENT APPLICATION

(11) **EP 4 571 231 A1**
(43) Date of publication of application: **18.06.2025**
(21) Application number: 23216416.0
(22) Date of filing: 13.12.2023
(51) Int. Cl.: F28F 1/02, F28F 1/04, B33Y 80/00, F28D 1/053

(54) **A TUBULAR HEAT EXCHANGER, AND A METHOD OF ARRANGING THEREOF**

(71) Applicant: VITO NV, 2400 Mol (BE)
(72) Inventor: RAIKAR, Praharsh Pravin Pai, 2400 Mol (BE); ANAND, Nitish, 2400 Mol (BE)
(74) Representative: V.O.

(57) **Abstract**

A tubular heat exchanger, comprising an inlet, an outlet, and staggered thermal transfer tubes positioned axially between them. The tubes are grouped into three sets with varying cross-sectional shapes and tapering characteristics. The first set has tubes with a more sharply tapering front section, the second set has tubes with a more sharply tapering back section, and the third set features tubes with a unique elongated shape, distinct from the first two sets. The invention also pertains to a method of arranging a tubular heat exchanger.

## Description

### FIELD OF THE INVENTION

The invention relates to a tubular heat exchanger comprising an inlet portion and an outlet portion defining a flow direction therebetween, and a plurality of thermal transfer tubes arranged between the inlet portion and the outlet portion. Furthermore, the invention relates to a method of arranging a tubular heat exchanger. Also, the invention relates to a system or device comprising a tubular heat exchanger.

### BACKGROUND TO THE INVENTION

Tubular heat exchangers are widely used for transferring heat between two or more fluids. Typically, such devices function by allowing one fluid to flow through tubes while another fluid flows outside the tubes. The efficiency and performance of these heat exchangers are influenced by a variety of factors, including the design, arrangement, and geometry of the tubes.

A multitude of designs for tubular heat exchangers exist in the art, each with its own set of advantages and disadvantages. Conventional designs often face challenges such as inadequate heat transfer, increased fouling tendencies, pressure drop issues, and inefficient flow distribution. To maximize heat transfer performance, it is crucial that the surface area contact between the fluids and the tubes is optimized. Furthermore, the arrangement of the tubes can play a significant role in enhancing the overall efficiency of the heat exchanger.

In addition to the arrangement of the tubes, their cross-sectional shapes can greatly impact heat transfer performance. The shape of the tubes dictates the flow patterns of the fluid, influencing turbulence, boundary layer characteristics, and consequently, the rate of heat transfer. Tubes with regular circular, ellipsoid or teardrop cross-sections may not always provide the most optimal performance, especially in applications requiring enhanced thermal transfer characteristics.

Additionally, the use of a singular tube shape or design throughout a heat exchanger may not always yield the desired performance outcomes. Different sections of the heat exchanger may benefit from varied tube designs tailored to their specific requirements. Thus, there exists a strong need for improved designs and arrangements of tubes in tubular heat exchangers to address the existing limitations and accommodate for the diverse requirements of various applications.

In light of the aforementioned challenges, the present invention seeks to address the need for improved tubular heat exchanger designs that aim to enhance the overall efficiency and performance.

### SUMMARY OF THE INVENTION

It is an object of the invention to provide for a method and a system that obviates at least one of the above mentioned drawbacks.

Additionally or alternatively, it is an object of the invention to provide for an improved tubular heat exchanger.

Additionally or alternatively, it is an object of the invention to provide for a tubular heat exchanger that operates at an enhanced level of efficiency.

Additionally or alternatively, it is an object of the invention to provide for a tubular heat exchanger with an improved design of tubes, ensuring that the tubes contributes towards achieving an enhanced heat exchange performance.

Thereto, the invention provides for a tubular heat exchanger comprising: an inlet portion and an outlet portion defining a flow direction therebetween; a plurality of thermal transfer tubes arranged between the inlet portion and the outlet portion, wherein the plurality of thermal transfer tubes extend along an axial path, wherein the plurality of thermal transfer tubes are arranged in a staggered pattern in which every other row of thermal transfer tubes is offset from rows adjacent to it; wherein a first set of thermal transfer tubes is provided at a leading end, a second set of thermal transfer tubes is provided at a trailing end, and a third set of thermal transfer tubes is provided at positions located between tubes of the first and second set; wherein, in a cross-sectional view along a transverse or angled plane relative to the axial path, tubes of the first set have an elongated shape with a first midsection, and a first front and back section both contiguous with the first midsection, wherein the first front section and first back section start at a location where the tube begins to taper inward and extend to respective outermost points of the tube, wherein the first midsection, first front section and first back section are smoothly connected to form a continuous outer boundary of the tubes of the first set, wherein the first front and back section both exhibit a convex curvature, wherein the first front section has a first degree of tapering, and the first back section has a second degree of tapering, wherein the first degree of tapering is larger than the second degree of tapering, such that the first front section narrows more sharply relative to the first back section; wherein, in a cross-sectional view along a transverse or angled plane relative to the axial path, tubes of the second set have an elongated shape with a second midsection, and a second front and back section both contiguous with the second midsection, wherein the second front section and second back section start at a location where the tube begins to taper inward and extend to respective outermost points of the tube, wherein the second midsection, second front section and second back section are smoothly connected to form a continuous outer boundary of the tubes of the second set, wherein the second front and back section both exhibit a convex curvature, wherein the second back section has a third degree of tapering, and the second front section has a fourth degree of tapering, wherein the third degree of tapering is larger than the fourth degree of tapering, such that the back section narrows more sharply relative to the front section; and wherein, in a cross-sectional view along a transverse or angled plane relative to the axial path, tubes of the third set have an elongated shape that is distinct from the shape of the tubes of the first and second set of tubes.

The tubular heat exchanger encompasses an inlet and an outlet portion, which together define a flow direction. A multitude of thermal transfer tubes are systematically situated between these inlet and outlet portions. These tubes are organized along an axial trajectory and are systematically laid out in a staggered arrangement. In such an arrangement, each alternate row of tubes is positioned offset in comparison to its adjacent rows. Specifically, the heat exchanger comprises a first set of tubes at its leading end, a second set at its trailing end, and a third set located between the tubes of the first and second sets. The tubes of the first and second sets exhibit a unique elongated shape when observed in a cross-sectional perspective along an angled or transverse plane relative to the axial path. The design of these tubes and their distinctive shape provide for maximized surface area contact, ensuring improved thermal transfer. Such an enhancement in thermal transfer directly translates to an increase in the efficiency of the heat exchanger.

In some examples, the tubular heat exchanger has staggered tubes with distinctive shapes. The staggered layout may ensure that alternate rows of tubes are offset from their neighboring rows. Three distinctive sets of tubes are provided: a leading set (first set), a trailing set (second set), and an intermediate set (third set). The tubes of the first set feature a front section that narrows more sharply than its back section, while the tubes of the second set have a back section that tapers more sharply than its front. The third set of tubes, importantly, exhibits a shape distinct from the first and second sets, emphasizing variety in the heat exchanger's design to optimize thermal transfer.

Various configurations of thermal transfer tubes may be incorporated, for example, they may be linearly, helically or radially aligned. In some examples the tubes are aligned along an axial path. These tubes may be placed in various staggered patterns, such as zig-zag or concentric patterns. Each set of tubes (first, second, and third) can exhibit unique characteristics.

In some examples, tubes of the first and second set form an elongated thermal transfer element. For example, the cross-sectional two-dimensional geometric contour on a plane of the tubes of the first set, comprises a semi-elliptical curve situated at the leftmost boundary of the tube, wherein a vertical axis of the semi-elliptical curve surpasses its horizontal counterpart in length. Immediately subsequent to the semi-elliptical initialization, the element extends into two parallel, individual, and uninterrupted linear segments, each emanating from the respective termination points of the aforementioned semi-elliptical curve and progressing rightward. This is followed by subsequent segments with convergent taper. Ensuing the straight extension, said subsequent segments following the linear segments exhibit a pronounced tapering, with a gradual convergence towards one another in a non-parallel orientation. This convergent trajectory culminates in the segments' intersection, crafting an angle less than 90 degrees and giving rise to a distinct pointed terminus, positioned as the element's rightmost extremity. However, a rounded end instead of a pointed terminus is alos possible. The tubes of the second set may have a similar but mirrored configuration. Slight dimensional variability may be allowed. The design and configuration of these thermal transfer element, contribute in an improved thermal conduction and a directed heat flow.

Optionally, data representative of the optimized geometric design of each thermal transfer element is outputted.

Optionally, data representative of the optimized geometric design is transferred to production equipment configured for producing the thermal transfer device.

Optionally, the production equipment comprises an additive manufacturing system.

Optionally, an additive manufacturing system is employed that is configured for fabricating at least parts of the optimized thermal transfer device based on the optimized design parameters.

Optionally, an output signal representative of the optimized geometric design is transferred to production equipment configured for producing an optimized physical object according to the output signal.

Optionally, the physical object is the thermal transfer device or a part of it.

It will be appreciated that the term "physical object" refers to any tangible item that can be produced based on the optimized geometric design derived from the computer-implemented method. The thermal transfer device may be the primary product that the method is designed to optimize. The thermal transfer device can be seen as an assembly comprising multiple thermal transfer elements. The optimized design may aim to improve aspects like efficiency, effectiveness, and/or manufacturability of this device.

It will be appreciated that instead of producing the entire thermal transfer device, the optimized design may be used to manufacture only certain parts or components of it. For example, if the thermal transfer device is made up of several different types of elements, the method might optimize the design of one specific type of element, and only that element might be produced based on the optimized design.

Optionally, in a cross-sectional view along a transverse or angled plane relative to the axial path, tubes of the third set only have a third front section and a third back section contiguous with each other.

In some examples, the tubes in the third set, when observed in a cross-sectional view, have only a front and a back section that are directly contiguous. This can further increase the efficiency of the thermal transfer in the tubular heat exchanger. In various cases and configurations, an enhanced flow dynamics and/or thermal exchange properties can be obtained.

Such simplification of the tube's shape, by eliminating any distinct midsection, can further improve the thermal transfer process, as it facilitates a more direct path for the heat exchange medium, thereby aiding in faster heat exchange and improved efficiency.

The absence of a distinct midsection in the tubes of the third set, i.e. said tubes primarily consists of a third front section and a third back section that adjoin each other seamlessly, may reduce potential flow resistance introduced by a pronounced midsection. Consequently, this design encourages a more efficient and streamlined flow of the heat exchange medium. In combination with the characteristics of the tubes of the first and second set, a heightened rate of heat transfer, as the medium can better interact with the tube surfaces, can be obtained.

Optionally, in a cross-sectional view along a transverse or angled plane relative to the axial path, tubes of the third set have an elongated shape with a third midsection, and a third front and back section both contiguous with the third midsection, wherein the third front section and third back section start at a location where the tube begins to taper inward and extend to respective outermost points of the tube, wherein the third midsection, third front section and third back section are smoothly connected to form a continuous outer boundary of the tubes of the third set, wherein the third front and back section both exhibit a convex curvature, and wherein the third front section and third back section start at a location where the tube begins to taper inward and extend to respective outermost points of the tube.

Elaborating further on the third set of tubes, in certain examples of the heat exchanger, these tubes feature an elongated shape comprising a midsection flanked by a front and a back section. These sections transition smoothly, forming a continuous outer boundary. Both the front and back sections begin where the tube starts tapering and exhibit convex curvatures, emphasizing the optimized shape for effective heat transfer.

The design of these tubes encompasses a third midsection, seamlessly flanked by third front and back sections. These front and back sections originate their curvature from a specific juncture where the tube commences its inward tapering and continue seamlessly until they reach their respective outermost limits. The presence of the third midsection, combined with the adjoining front and back sections, augments the surface area available for heat exchange. This increased surface area can translate into more extended contact between the tube walls and the heat exchange medium, which, in turn, can amplify the rate of heat transfer. Moreover, the specified tube geometry promotes consistent flow dynamics, ensuring that the heat exchange medium flows uniformly, minimizing the potential for turbulent or erratic flow patterns.

Optionally, the first and second midsection have a substantially lower convexity with respect to that of the third midsection.

In some examples, the midsections of the tubes in the first and second sets exhibit a noticeably lower convexity when juxtaposed with the third set's midsection. This differential in convexity provides significant advantages in directing fluid flow and enhancing thermal efficiency across the exchanger.

The midsections of the tubes from the first and second sets are characterized by a substantially reduced convexity, making them less outwardly bulging when compared to the pronounced convexity of the third midsection. This deliberate variation in tube curvature across the sets can improve the flow dynamics of the heat exchange medium inside the tubular heat exchanger. The tubes of the first and second sets with their subdued convexity serve to channel the flow of the heat exchange medium, guiding it efficiently across the tube surfaces. On the other hand, the more prominently convex third midsection presents an expanded surface area, which can promote increased contact with the medium at least for some operating conditions of the tubular heat exchanger. The cumulative effect of these design choices is that the heat exchange medium can gain improved exposure to the various tube surfaces during its travel, ensuring an improved rate of heat transfer. This heightened interaction between the medium and the tube surfaces inherently amplifies the thermal transfer capabilities of the tubular heat exchanger.

Optionally, the first and second midsection is substantially flat.

In some examples, the midsections of the first and second set of tubes are substantially flat or quasi-flat. In certain embodiments, only minor curvature or negligible curvature is permitted for these midsections. This implies that while the midsections of the first and second set of tubes may exhibit a slight deviation from a perfectly flat profile, any such deviation is limited to ensure that the primary character of these sections remains largely planar.

This flat design ensures that the heat exchange medium flows without significant disruptions, which can otherwise hinder the heat exchange process. The substantially flat profile may thus further streamline flow and facilitate efficient heat transfer within the exchanger. The design choice promotes smooth flow dynamics and optimizes heat transfer, enhancing the efficiency of the heat exchanger.

Optionally, the third midsection has a curved portion.

In some examples, the third midsection of the tubes incorporates a curved segment. This curvature can ensure an improved flow of the heat exchange medium, thereby facilitating better heat transfer. The medium can be effectively exposed to a larger surface area of the tube, thereby improving the overall heat exchange rate and efficiency of the system.

The third midsection of the respective tubes may have a distinct curved segment in different ways, for example chosen based on the operational conditions (flow rate, flow characteristics, temperature, properties of medium, etc.). The presence of this curvature within the midsection can improve the dynamic interaction of the medium with the surfaces of the tubes, boosting the thermal contact between the medium and said tubes, thus facilitating a more efficient and rapid heat exchange process.

A greater portion of the heat exchange medium may come into direct contact with the tube surface, maximizing the thermal exchange potential. This increased surface interaction accelerates the heat exchange rate, resulting in a system that operates with heightened efficiency. Therefore, a more consistent and comprehensive thermal interaction throughout the length of the tube may be obtained.

In some examples, the third midsection of the tubes in the tubular heat exchanger may have a distinct curved design. This curved portion can be semicircular, parabolic, or even waveform-like in certain alternative examples, thereby presenting varying thermal transfer characteristics.

Optionally, the first midsection and the second midsection each extend over a range of 20 to 60 percent of the total length of their respective tubes.

The length coverage of the first and second midsections of their respective tubes in the heat exchanger may range from covering a fifth to more than half of the total tube length in certain design variations. This range may be modified to be narrower or broader in alternate embodiments, depending on the desired thermal transfer efficiencies and flow dynamics.

In some examples, the midsections of the tubes in the first and second sets extend over a range constituting 20 to 60 percent of the tubes' total length. Advantageously, such design provides a balance between flow dynamics and maximizing thermal transfer efficiency.

By optimizing this length, the heat exchanger ensures that the medium can experience optimal exposure to the tubes, thereby promoting enhanced thermal transfer. This length range is specifically selected to provide a balance between maximizing exposure and ensuring smooth flow dynamics, leading to enhanced efficiency.

Advantageously, the tubes are able to offer a broad and consistent surface for the medium's interaction without unnecessarily elongating the flow path, which can potentially diminish the rate of heat exchange. While increasing the surface area contact is important, it's also important to ensure that the medium flows through the tubes without significant impediments. By confining the midsections to this defined range, a harmony is achieved where the heat exchange medium experiences both enhanced exposure for improved thermal transfer and an unhindered flow for maintaining a steady rate of exchange.

Optionally, the first midsection and the second midsection each extend over a range of 30 to 50 percent of the total length of their respective tubes.

In some examples, the midsections of the tubes in both the first and second sets cover a span between 30 to 50 percent of their entire tube length, pinpointing a design sweet spot for achieving improved heat exchange performance.

This specific range strikes a balance between increasing thermal transfer surface area and ensuring that the medium doesn't face excessive resistance or disruptions during its flow. Such a balance directly impacts the overall efficiency of the heat exchanger in a positive manner.

In some examples, other ranges may be employed, such as 25 to 55 percent or even 35 to 45 percent, allowing for tailored thermal transfer efficiencies.

Optionally, the third midsection extends over a range of 0.5 to 20 percent of the total length of the respective tubes, preferably over a range of 1 to 10 percent.

In some examples, the third midsection can range from occupying a mere 0.5 percent to a substantial 20 percent of the tubes' total length, with a preference for the 1 to 10 percent range. This indicates a relatively small third midsection, compared to the length of the first and second midsections.

The midsections of the third set of tubes, which is the section important for influencing the flow and heat transfer dynamics, spans only a limited stretch of the tube's entire length. Specifically, this length falls within the range of 0.5 to 20 percent, with an even more narrowed preference towards just 1 to 10 percent.

Turbulence in the flow of the heat exchange medium is known to be beneficial. When the medium moves in a turbulent manner, it tends to come in contact with a greater surface area of the tube, enhancing the heat transfer rate. The third set of tubes can induce turbulence. However, the challenge lies in ensuring that while this turbulence is beneficial, it doesn't overstep its bounds. Excessive turbulence can lead to disruptions in flow, backflow, or even mechanical wear and tear. This is where the design choice of limiting the midsection of the third set of tubes to a maximum of 20 percent, and preferably even lesser to 10 percent, becomes important. This constrained span means that while the tubes induce the desired turbulence, they don't allow it to become unruly or detrimental.

By keeping the turbulence-inducing midsection to this optimal length, the invention navigates the fine line between two opposing requirements: the need for turbulence to improve heat transfer and the need to prevent excessive disturbances which may hinder efficient flow. Through this balancing act, the heat exchanger achieves a sweet spot wherein it maximizes the advantages of turbulence without compromising on the overarching importance of smooth and consistent flow dynamics. The result is a system that is not just efficient but also reliable, ensuring that the heat exchange process is both effective and sustainable.

In some examples, the third midsection of the tubes in certain design variants may extend over a minuscule fraction (e.g., half a percent) to about a fifth of the total tube length in cross-section. However, alternate embodiments may see this range tweaked, such as from 2 to 15 percent or 1 to 5 percent, dependent on specific use cases and desired efficiencies.

Optionally, the first and third degree of tapering are substantially the same, and wherein the second and fourth degree of tapering are substantially the same.

The simplification in the tube's structural design not only bolsters the thermal exchange properties but may also lead to reduced manufacturing complexities, translating to cost savings in production.

In some examples, the tapering degrees of the front section of the first set and the back section of the second set are remarkably similar. Similarly, the tapering degrees of the back section of the first set and the front section of the second set match closely. This uniformity/consistency in tapering can streamline fluid flow and enhance the exchanger's thermal performance.

By maintaining this uniformity, the tubes ensure consistent flow characteristics throughout the heat exchanger. This consistency promotes a stable and efficient heat exchange process, directly enhancing the overall efficiency of the system.

The term "tapering degree" can be understood as the angle or gradient at which these sections narrow or widen, influencing how they interact with the flowing heat exchange medium.

Fluids, including heat exchange mediums, have specific flow dynamics when they move through tubes. If there's a change in the tube's shape or size, it can affect how the fluid flows. By ensuring that the tapering degrees of these sections are equivalent, the heat exchanger maintains a consistency in how the medium flows throughout the device.

Differences in tube tapering can introduce variances in flow speed, turbulence, or even cause disturbances that can interrupt the heat exchange process. Uniform tapering can reduce the likelihood of such disturbances, ensuring the medium flows smoothly.

Furthermore, stability is a key component of efficiency for heat exchangers. Variabilities, especially if they're abrupt, can cause fluctuations in temperature, leading to an unstable exchange process. The uniform tapering of the sections in the tubes assures that the heat exchange remains stable, maximizing the efficiency of the process.

In some examples of the tubular heat exchanger, the tapering degrees for the front sections of the first and third sets, and the back sections of the second and fourth sets may be virtually identical. However, alternative designs may exhibit slight variations between these tapering degrees or may incorporate other design features, like flanges or fins, to modify the tubes' thermal properties.

The term 'tapering degree' refers to the specific angular measurement, or gradient, characterizing the progressive reduction or increase in the cross-sectional diameter or dimension of an elongated structure (cf. cross sectional profile of tube). This gradient can quantify the rate at which the structure transitions from a wider section to a narrower section, or vice-versa. The tapering degree is inherently linked to the design and function of the structure, impacting flow dynamics, structural integrity, and other related properties.

In simpler terms, the tapering degree may be understood as how steeply the tube narrows (cf. inward) as you move along its length towards an end. It provides a measurable means to describe and differentiate between tubes that may have a gentle, gradual narrowing versus those that narrow more abruptly.

The tapering degree provides a precise and objective way to express how the shape of a tube changes. In some examples, it can be represented and/or approximated as/by an angle or a ratio. The specific tapering degree chosen in the design of a structure will have implications for its function. For tubes in a heat exchanger, it can influence the flow rate, turbulence, and overall efficiency of heat transfer.

When the tapering degree is consistent across different sections of a structure, it can ensure uniform flow characteristics, minimizing disruptions and increasing the overall efficiency of the tubular heat exchanger.

Optionally, tubes of the first and second set have substantially the same geometric configuration, and wherein the tubes of the second set are arranged in a mirrored configuration relative to the tubes of the first set.

In some examples, the tubes in the first and second sets not only share a similar geometric configuration but are also arranged such that the second set's tubes mirror those of the first. This symmetrical arrangement can play an important role in harmonizing flow dynamics across the exchanger.

The tubes from the first and second sets may have almost identical geometric structures. Furthermore, the tubes from the second set are arranged in a mirror image relative to the tubes from the first set. Such a symmetric design aids in enhancing the thermal transfer properties, leading to a more efficient heat exchanger.

In some examples, the tubes in both the first and second sets share almost the same geometric design. This means that the size, shape, and overall configuration of these tubes are virtually indistinguishable. This uniformity can simplify manufacturing processes, reduce costs, and ensure that any observations or enhancements made for one set can be directly applied to the other. Beyond just having similar structures, the tubes from the second set are arranged in such a way that they mirror the tubes from the first set. This is analogous to placing an object in front of a mirror and seeing its reflection. This mirroring can be performed in the plane transverse to the longitudinal length direction of the cross section profile of the tubes (i.e. direction substantially along the flow direction).

An even distribution of the heat exchange medium, facilitated by the symmetric design, ensures that there's maximum exposure of the medium to the tube surfaces. This directly impacts the heat transfer rate, making it more efficient. Without this symmetry, there's a risk that one section may have hotter or colder zones than the other, leading to inefficiencies and potential long-term issues.

Optionally, the first back section and the second front section have a pointed end.

In some examples, the back section of the tubes in the first set and the front section of the second set culminate in pointed ends. These pointed profiles can aid in directing fluid flow or minimizing flow resistance, thereby contributing to the exchanger's efficiency for various operational conditions.

This pointed design ensures that the heat exchange medium is directed in a specific path, thereby optimizing its exposure to the tube surfaces. This increased exposure and guided flow result in improved thermal transfer properties and subsequently, a more efficient heat exchanger.

In some examples, instead of having flat, rounded, or other shaped terminations, these sections conclude with a tapered or sharp point. The pointed end design can better guide or direct the flow of the heat exchange medium. By channeling the flow in a specific direction, the medium can be made to follow a predetermined path. This targeted flow ensures that the heat exchange medium doesn't scatter or divert in undesirable paths, but instead flows in a manner that maximizes its exposure to the tube surfaces.

With the medium directed in a specific path due to the pointed design, there is an increased likelihood that more of the medium comes into direct contact with the tube surfaces. This is beneficial because more surface contact between the medium and the tubes means a more efficient transfer of heat.

Optionally, the first back section and the second front section have a rounded end.

Alternatively, in other examples, the back section of the first set of tubes and the front section of the second set conclude in rounded ends. Such rounded terminations may be key in reducing flow disruptions and enhancing heat exchange.

The rounded design promotes smoother flow dynamics, reducing any sharp bends or disruptions that may impede the flow of the heat exchange medium. By ensuring a smoother flow, the heat exchanger enhances its thermal transfer properties, can lead to improved efficiency for various operational conditions.

In some examples, instead of a pointed termination, the ends of the first back section and the second front section can be rounded. This implies a curve or a semi-circle at the termination, contrasting with sharp or flat endings. Rounded terminations can serve to mitigate flow disruptions. Flow characteristics of the heat exchange medium can be enhanced. Rounded structures, by their nature, reduce sharp turns or sudden changes in flow direction. This means the heat exchange medium flows over these rounded ends in a more laminar, less turbulent manner. While some turbulence can be beneficial for heat exchange, excessive turbulence may result in undesirable effects like increased pressure drop, and even wear. The rounded design thus strikes a balance, providing adequate exposure without inducing excessive turbulence.

With the heat exchange medium experiencing fewer disruptions and a smoother flow, there's an increased probability of effective heat transfer between the medium and the tubes.

Optionally, each tube exhibits a curvature that is symmetric about a central chord line.

In some examples, each tube features a curvature that symmetrically straddles a central chord line. This symmetrical design underscores a balanced approach, ensuring uniform flow characteristics and improved thermal transfer. Such a balanced flow aids in increasing the thermal transfer properties, directly impacting the efficiency of the heat exchanger in a positive manner.

In geometric terms, a chord is a straight line connecting two points on a curve or a circle. So, in the context of the tubes, this would imply that if you were to draw a straight line (chord) from one side of the tube to the opposite side, the curvature above this line would mirror the curvature below. This symmetric design ensures uniformity in the tube's structure, which can be important for consistent performance and predictable flow dynamics. The balanced flow translates into an even distribution of the heat exchange medium across the tube surfaces. This ensures that all parts of the tube are effectively participating in the heat transfer process. With an even distribution, there's also consistent exposure of the heat exchange medium to the tube surfaces. This means that every section of the tube has an equal opportunity to transfer heat, optimizing the overall heat exchange process.

Any feature that promotes consistent and balanced flow inherently aims to increase the thermal transfer properties. By ensuring that the heat exchange medium is uniformly exposed to the tube surfaces, more effective heat exchange can occur. As a direct consequence of this increase heat transfer, the efficiency of the heat exchanger is improved.

In the design of the tubular heat exchanger, the structural arrangement of the tubes plays an important role in dictating both performance and efficiency. One prevalent configuration is the matrix or array layout. This layout organizes tubes in a systematic grid-like pattern, wherein the tubes can be positioned in parallel, perpendicular, or at varying angles to one another, creating a cohesive matrix. The precise geometry and spacing of this matrix can be tailored to optimize fluid flow, maximize surface area exposure, and thereby enhance heat transfer properties. Beyond the simple rectilinear arrangements, tubes within the matrix can be staggered or offset, as seen in some of the described embodiments, to further optimize turbulent flow and enhance thermal transfer coefficients. The matrix layout's inherent modularity allows for scalable designs, facilitating the adaptation of the heat exchanger to various capacities and applications. Furthermore, the arrayed configuration ensures uniform distribution of thermal stresses across the tubes, promoting durability and longevity of the heat exchanger system. Therefore, the matrix/array layout, through its organized and adaptable structure, can offer a balanced fusion of functionality and design flexibility in tubular heat exchanger systems.

Optionally, the tubes are structurally arranged in a radial layout.

The radial layout distinguishing itself by organizing tubes in concentric circles or arcs radiating from a central point or axis. This configuration capitalizes on the principle of radial symmetry. The inherent advantage of a radial layout is its ability to provide consistent heat transfer across the entire exchanger, as each tube is equidistant from the center, ensuring uniform thermal distribution and fluid dynamics. This can be especially beneficial in applications where a central input or output is desired, with the fluid moving radially inwards or outwards. The spacing between the tubes in this arrangement can be tailored to optimize flow patterns, reduce potential dead zones, and improve overall heat transfer efficiency. Moreover, the radial configuration can be combined with other layouts or incorporated into hybrid designs, offering a versatile approach to address unique thermal challenges.

According to an aspect, the invention provides for a method of arranging a tubular heat exchanger, the method including the steps of: providing an inlet portion and an outlet portion that define a flow direction therebetween; providing a plurality of thermal transfer tubes arranged between the inlet portion and the outlet portion, wherein the plurality of thermal transfer tubes extend along an axial path, wherein the plurality of thermal transfer tubes are arranged in a staggered pattern in which every other row of thermal transfer tubes is offset from rows adjacent to it; wherein a first set of thermal transfer tubes is provided at a leading end, a second set of thermal transfer tubes is provided at a trailing end, and a third set of thermal transfer tubes is provided at positions located between tubes of the first and second set; wherein, in a cross-sectional view along a transverse or angled plane relative to the axial path, tubes of the first set have an elongated shape with a first midsection, and a first front and back section both contiguous with the first midsection, wherein the first front section and first back section start at a location where the tube begins to taper inward and extend to respective outermost points of the tube, wherein the first midsection, first front section and first back section are smoothly connected to form a continuous outer boundary of the tubes of the first set, wherein the first front and back section both exhibit a convex curvature, wherein the first front section has a first degree of tapering, and the first back section has a second degree of tapering, wherein the first degree of tapering is larger than the second degree of tapering, such that the first front section narrows more sharply relative to the first back section; wherein, in a cross-sectional view along a transverse or angled plane relative to the axial path, tubes of the second set have an elongated shape with a second midsection, and a second front and back section both contiguous with the second midsection, wherein the second front section and second back section start at a location where the tube begins to taper inward and extend to respective outermost points of the tube, wherein the second midsection, second front section and second back section are smoothly connected to form a continuous outer boundary of the tubes of the second set, wherein the second front and back section both exhibit a convex curvature, wherein the second back section has a third degree of tapering, and the second front section has a fourth degree of tapering, wherein the third degree of tapering is larger than the fourth degree of tapering, such that the back section narrows more sharply relative to the front section; and wherein, in a cross-sectional view along a transverse or angled plane relative to the axial path, tubes of the third set have an elongated shape that is distinct from the shape of the tubes of the first and second set of tubes.

Advantageously, not only an enhancement in the thermal transfer properties can be obtained but also a promotion of steadier flow dynamics, both of which contribute to the elevated overall efficiency of the tubular heat exchanger system.

According to an aspect, the invention provides for a tubular heat exchanger, comprising an inlet, an outlet, and staggered thermal transfer tubes positioned axially between them. The tubes are grouped into three sets with varying cross-sectional shapes and tapering characteristics. The first set has tubes with a more sharply tapering front section, the second set has tubes with a more sharply tapering back section, and the third set features tubes with a unique elongated shape, distinct from the first two sets.

It will be appreciated that it is to be understood that the degrees of tapering, specifically the first, second, third, and fourth degrees, pertain to the respective angles of incline observed in the thermal transfer tubes' cross-sectional profiles. Each said degree is distinguishable and is quantifiably. The first degree corresponds to the tapering angle of the front section of the tubes of the first set, whereas the second degree delineates the tapering angle of the back section of the same set of tubes. Conversely, the third degree defines the tapering angle of the back section of the tubes of the second set, and the fourth degree relates to the tapering angle of the front section of the tubes of the second set. Each of these degrees is measured with respect to a reference plane perpendicular to the tube's axial path.

The term "tapering," as utilized in the context of the degrees and angles mentioned, encompasses not only linear or straight inclinations but also those of a curved nature. That is to say, the tapering gradient of the thermal transfer tubes, while traditionally envisioned as a straight incline, can also manifest as a curvilinear descent, thereby introducing a continuous change in diameter over the length of the tapering section, rather than a uniform, straight reduction. Such curved tapering may offer advantages in terms of fluid dynamics, heat transfer, and structural integrity, depending on the specific application of the tubular heat exchanger.

Moreover, whether straight or curved, is not strictly limited to terminating in a pointy or sharp edge. Indeed, while a pointed termination may be preferred in certain embodiments for optimizing flow dynamics or enhancing heat transfer rates, alternative configurations are entirely feasible. Specifically, the tapering can conclude in a rounded or blunt surface, mitigating potential concerns related to wear, erosion, or damage due to fluid turbulence. The choice between a pointed or rounded terminus is largely dictated by design considerations, operational requirements, and the specific conditions the tubular heat exchanger is intended to address. As such, both configurations, namely pointed and rounded, are to be encompassed within the scope of this patent disclosure.

It will be appreciated that, in the context of the present disclosure, for example when referring to the tubes of the first set that exhibit an elongated shape with a first midsection, the term "contiguous" with respect to the first front and back section being contiguous with the first midsection shall be understood to mean that the first front and back sections are directly connected to and seamlessly extend from the first midsection without any intervening gaps or disjunctions. It is emphasized that "contiguous" does not merely denote being adjacent to or in proximity of the first midsection, but instead implies a continuous, uninterrupted extension of the first midsection into the first front and back sections, thereby forming a unified, integrated structure.

It will be appreciated that the tubes comprising the third set exhibit an elongated geometry that is unequivocally differentiated from the configurations of tubes found in both the first and second sets. While the tubes of the first and second sets are characterized by specific tapering degrees and contiguous mid, front, and back sections, the tubes of the third set manifest a cross-sectional shape, when viewed on a plane transverse or angled relative to their axial path, that deviates in contour, tapering, and/or other structural attributes.

It will be appreciated that the tubes can be constructed to be hollow. This hollow configuration allows for a fluid to flow therethrough, thereby facilitating enhanced heat transfer properties. The fluid may comprise various mediums such as, but not limited to, air, water, a refrigerant, or a combination thereof. The inner surface of these hollow tubes may further be smooth or textured to modify the fluid dynamics or to improve the thermal transfer characteristics. Additionally, the tubes can be designed to accommodate a laminar, turbulent, or transitional flow regime within them. The internal diameter of the hollow tubes can be modified based on the desired flow rate and the specific application of the heat exchanger. Furthermore, the hollow nature of the tubes allows for the potential integration of internal fins or other structures, designed to further increase the surface area for heat exchange and enhance the efficiency of the thermal transfer process.

Heat flux is an important parameter in the field of heat transfer, particularly for tubular heat exchangers. It represents the rate of thermal energy transfer per unit area, typically expressed in units such as watts per square meter (W/m^2). In the context of tubular heat exchangers, the magnitude and distribution of heat flux can have profound implications on the device's performance and efficiency. A uniform and high heat flux indicates efficient thermal energy transfer between the fluid inside the tubes and the surrounding environment or another fluid. Factors affecting the heat flux within such systems include the temperature differential between the interacting substances, the material properties of the tubes (like thermal conductivity), the fluid dynamics (laminar or turbulent flow), and the surface characteristics of the tubes (smooth, textured, or finned). Modulating any of these factors, either individually or in combination, can result in an increase of heat flux, leading to enhanced performance of the heat exchanger.

It will be appreciated that any of the aspects, features and options described in view of the tubular heat exchanger apply equally to the method and the described device and system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a cross-sectional view of tubes of a tubular heat exchanger;
Fig. 2 shows a schematic diagram of a cross-sectional view of tubes of a tubular heat exchanger;
Fig. 3a, 3b show a schematic diagram of a cross-sectional view of a tube of a first set and second set of tubes, respectively; and
Fig. 4a-c show a schematic diagram of an exemplary performance analysis for an interior design of a tubular heat exchanger.

### DETAILED DESCRIPTION

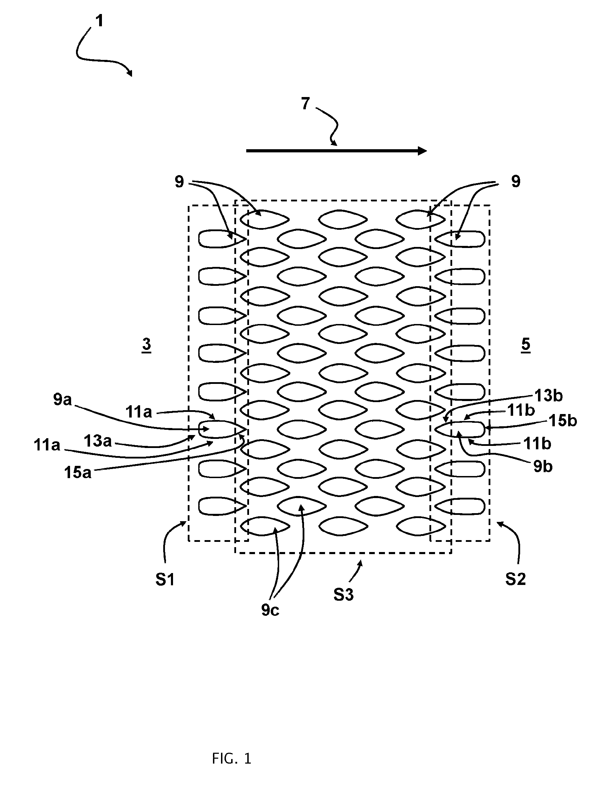

Fig. 1 shows a schematic diagram of a cross-sectional view of tubes of a tubular heat exchanger 1. Only a part of the tubular heat exchanger is shown. The tubular heat exchanger 1 comprises an inlet portion 3 and an outlet portion 5 defining a flow direction 7 therebetween. A plurality of thermal transfer tubes 9 arranged between the inlet portion 3 and the outlet portion 5, wherein the plurality of thermal transfer tubes 9 extend along an axial path. The axial path extends through the plane of the cross-section depicted in fig. 1. The plurality of thermal transfer tubes 9 are arranged in a staggered pattern in which every other row of thermal transfer tubes is offset from rows adjacent to it.

A first set of thermal transfer tubes S1 is provided at a leading end. A second set of thermal transfer tubes S2 is provided at a trailing end. A third set of thermal transfer tubes S3 is provided at positions located between tubes of the first and second set S1, S2.

It will be appreciated that the terms "leading end" and "trailing end" denote positional arrangements. The "leading end" refers to the forefront or the initial part of a (tube) structure. Conversely, the "trailing end" denotes the rearward or final part that follows after the leading portion (cf. 'rear' or 'end').

In a cross-sectional view along a transverse plane relative to the axial path, tubes 9a of the first set S1 have an elongated shape with a first midsection 11a, and a first front section 13a and first back section 15a both contiguous with the first midsection 11a, wherein the first front section 13a and first back section 15a start at a location where the tube 9a begins to taper inward and extend to respective outermost points of the tube 9a, wherein the first midsection 11a, first front section 13a and first back section 15a are smoothly connected to form a continuous outer boundary of the tubes 9a of the first set S 1. The first front section 13a and first back section 15a both exhibit a convex curvature. The first front section 13a has a first degree of tapering, and the first back section 15a has a second degree of tapering, wherein the first degree of tapering is larger than the second degree of tapering, such that the first front section 13a narrows more sharply relative to the first back section 15a.

In a cross-sectional view along a transverse plane relative to the axial path, tubes 9b of the second set S2 have an elongated shape with a second midsection 11b, and a second front section 13b and second back section 15b both contiguous with the second midsection 11b, wherein the second front section 13b and second back section 15b start at a location where the tube begins to taper inward and extend to respective outermost points of the tube 9b, wherein the second midsection 11b, second front section 13b and second back section 15b are smoothly connected to form a continuous outer boundary of the tubes 9b of the second set S2, wherein the second front 13b and back section 15b both exhibit a convex curvature, wherein the second back section 15b has a third degree of tapering, and the second front section has a fourth degree of tapering, wherein the third degree of tapering is larger than the fourth degree of tapering, such that the second back section 15b narrows more sharply relative to the second front section 13b.

In a cross-sectional view along a transverse plane relative to the axial path, tubes 9c of the third set S3 have an elongated shape that is distinct from the shape of the tubes 9a, 9b of the first and second set S1, S2.

Advantageously, the tubular heat exchanger can provide for a reduced pressure drop and/or an improved fluid-dynamic performance.

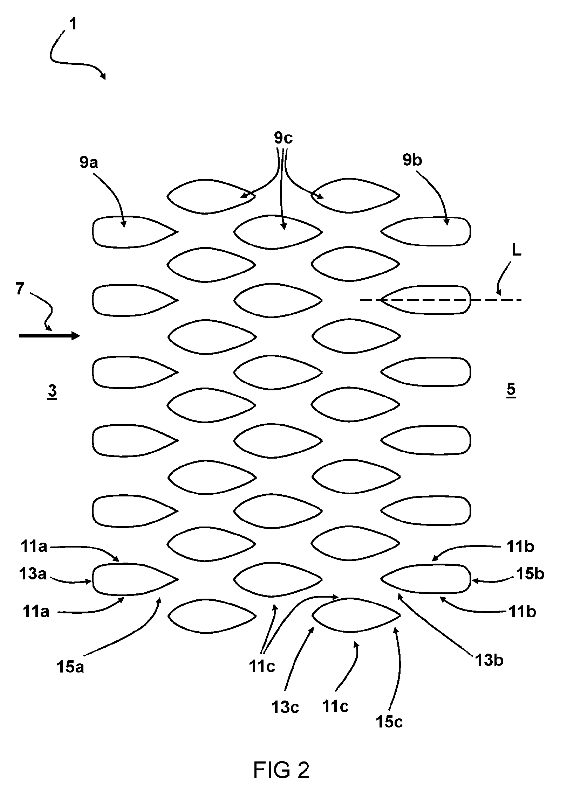

Fig. 2 shows a schematic diagram of a cross-sectional view of tubes 9a-c of a tubular heat exchanger 1. In a cross-sectional view along a transverse plane relative to the axial path, tubes 9c of the third set only have a third front section and a third back section contiguous with each other.

In this example, tubes 9c of the third set have an elongated shape with a third midsection 11c, and a third front section 13c and third back section 15c both contiguous with the third midsection 11c. The third front section 13c and third back section 15c start at a location where the tube begins to taper inward and extend to respective outermost points of the tube 9c. The third midsection 11c, third front section 13c and third back section 15c are smoothly connected to form a continuous outer boundary of the tubes 9c of the third set S3, wherein the third front section 13c and third back section 15c both exhibit a convex curvature, and wherein the third front section 13c and third back section 15c start at a location where the tube begins to taper inward and extend to respective outermost points of the tube. Furthermore, the first midsection 11a and second midsection 11b have a substantially lower convexity with respect to that of the third midsection 11c.

In this example, the first and second midsection 11a, 11b is substantially flat, and wherein the third midsection 11c has a curved portion.

In this example, the first midsection 11a and the second midsection 11b each extend over a range of 20 to 60 percent of the total length of their respective tubes 9a, 9b, respectively. Furthermore, the third midsection 11c extends over a range of 0.5 to 20 percent of the total length of the respective tubes, in this example, even lower than 10 percent.

Furthermore, in this example, the first and third degree of tapering are substantially the same, and wherein the second and fourth degree of tapering are substantially the same. Also, in this example, tubes of the first and second set have substantially the same geometric configuration, and wherein the tubes of the second set are arranged in a mirrored configuration relative to the tubes of the first set. The mirror line is the vertical line (perpendicular to the length direction L of the tubes.

In this example, the first back section 15b and the second front section 13b have a pointed end. In this example, the second front section 13b has a rounded end, and the first front section 13a has a pointed end. However, it is also envisaged that both have a pointed end, or alternatively, that both have a rounded end, or alternatively, that the second front section 13b has a sharp end, and that the first front section 13a has a rounded end.

In this example, each tube exhibits a curvature that is symmetric about a central chord line L. However, asymmetric shapes are also possible, depending on the operational characteristics and/or parameters of the tubular heat exchanger.

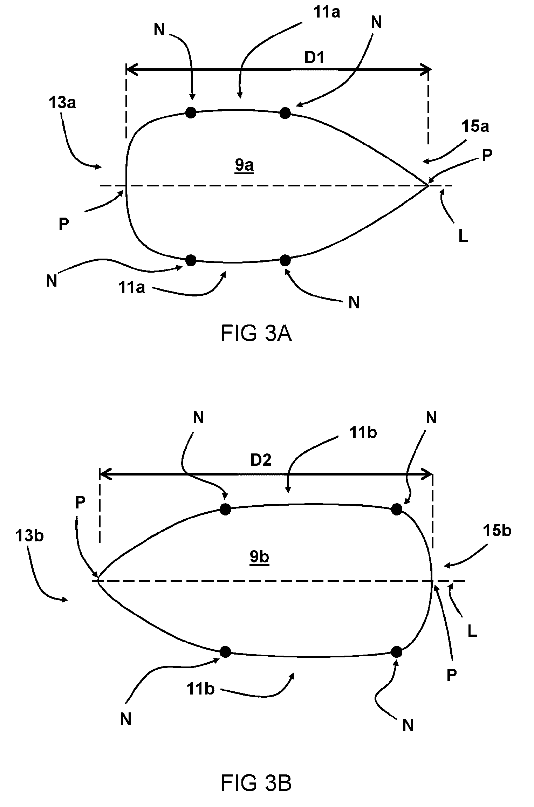

Fig. 3a shows a schematic diagram of a cross-sectional view of a tube 9a of an a first set S1. Similarly, fig. 3b shows a schematic diagram of a cross-sectional view of a tube 9b of a second set S2.

As shown in fig. 3a, in a cross-sectional view along a transverse or angled plane relative to the axial path of the tubes 9a, said tubes 9a of the first set S1 have an elongated shape with a first midsection 11a, and a first front section 13a and back section 15a both contiguous with the first midsection 11a. The first front section 13a and first back section 15a start at a location (indicated by nodes N) where the tube begins to taper inward and extend to respective outermost points P of the tube. The first midsection 11a, first front section 13a and first back section 15a are smoothly connected to form a continuous outer boundary of the tubes 9a of the first set S1. The first front 13a and back section 15a both exhibit a convex curvature. The first front section 13a has a first degree of tapering, and the first back section 15b has a second degree of tapering, the first degree of tapering being larger than the second degree of tapering, such that the first front section 13a narrows more sharply relative to the first back section 15a.

Furthermore, as shown in fig. 3b, in a cross-sectional view along a transverse or angled plane relative to the axial path of the tubes 9b, said tubes 9b of the second set S2 have an elongated shape with a second midsection 11b, and a second front section 13b and back section 15b both contiguous with the second midsection 11b. The second front section 13b and second back section 15b start at a location (indicated by nodes N) where the tube begins to taper inward and extend to respective outermost points P of the tube 9b. The second midsection 11b, second front section 13b and second back section 15b are smoothly connected to form a continuous outer boundary of the tubes 9b of the second set S2. The second front 13b and back section 15b both exhibit a convex curvature, and the second back section 15b has a third degree of tapering, and the second front section 13b has a fourth degree of tapering, the third degree of tapering being larger than the fourth degree of tapering, such that the back section 15b narrows more sharply relative to the front section 13b.

In these examples, the first and second midsections 11a, 11b are substantially flat. Moreover, the first and second midsections 11a, 11b extend over a range of 20 to 60 percent of the total length of their respective tubes, in the exemplary embodiment even over a range of 30 to 50 percent of the total length D1, D2 of their respective tubes 9a, 9b. In this example the length of the tubes 9b of the second set S2 is larger than the length of the tubes 9a of the first set S1.

The rationale behind this range is anchored in understanding the dual imperatives of the heat exchange process. On one hand, there's the imperative to provide a sufficient surface area to facilitate robust thermal transfer. This surface area determines the extent to which the heat exchange medium can effectively interact with the tube, directly influencing the rate of heat exchange. On the other hand, the imperative of fluid dynamics comes into play, wherein the design seeks to ensure an unhindered and efficient flow of the medium through the tubes, minimizing any potential disruptions or bottlenecks. The choice of the 30 to 50 percent range endeavors to harmonize these dual imperatives. By constraining the midsections to this specific range, the design achieves a sweet spot. It ensures that while the medium has an ample surface for effective heat transfer, it doesn't get bogged down by excessive tube lengths that can pose resistance or create turbulence. This proportional design characteristic has direct implications on the heat exchanger's performance. By facilitating both optimal thermal transfer and streamlined flow dynamics simultaneously, it elevates the overall efficiency of the system. Thus, the heat exchanger, configured by implementing this design characteristic, not only exhibits enhanced thermal properties but also ensures that the medium flows through it in a manner that is both swift and efficient, maximizing the overall effectiveness of the heat exchange process.

The generic shape of the tubes 9a of the first set S1 are similar to that of the second tubes 9b, but mirrored along a vertical line (transverse to the line L).

The overall shape of the tubes 9a, 9b in cross-section, represented by a two-dimensional geometric figure on a plane, is symmetrical. There is a semblance of balance between the top and bottom contours.

In fig. 3a, starting from the leftmost point, the shape begins with a curve having semi-elliptical characteristics. The semi-ellipse has a longer vertical axis compared to its horizontal axis. From the end of the semi-elliptical curve, the shape transitions into two substantially linear segments, that are followed by subsequent segments that converges as they extend rightward. The substantially linear segments at the top and bottom are substantially parallel, whilst the subsequent segments are not parallel and meet at a point, forming an acute angle. The shape concludes at a sharp tip on the rightmost end, formed by the convergence of the aforementioned segments subsequent to the substantially linear segments.

In this example, the body of the tube 9a transitions into dual linear segments that are followed by segments that converge in a non-parallel manner as they extend rightward, ultimately meeting at an acute angle to form a pointed terminus on the rightmost end of said body. However, the convergence point may also be rounded (cf. tube 9b of the second set S2).

The entirety of said body of the tube 9a remains enclosed, forming a continuous, uninterrupted boundary. The broadened left-oriented end of said body progresses to a narrowed right-oriented end, the left side being the leading edge/end with respect to the flow direction inside the tubular heat exchanger. The unique geometric configuration in cross-section can offer enhanced thermal transfer properties and efficiency due to its distinctive characteristics.

In this example shown in fig. 3a, immediately after the semi-elliptical curve, the shape of the thermal transfer element begins its evolution into two distinct linear segments. These segments are defined by their straight-edged profiles that diverge from the curvature of the semi-ellipse. The linear segments may be substantially horizontal or flat. However, a small curvature may be allowed. Subsequent segments proceed rightward and approach one another in a deliberate manner, hence not maintaining a equidistance throughout their length, indicating their non-parallel orientation. This orientation ensures that the segments are slated to intersect. In this example, the aforementioned subsequent segments continue their trajectory until they meet, forming an angle less than 90 degrees between them. This acute intersection culminates in a sharp and precise point, hereby referred to as the 'pointed terminus'. However, a rounded edge is also possible. The structural features augment the thermal transfer element's efficacy in channeling heat in a specific direction, optimizing its performance in thermal distribution applications.

The midsection is the part of the tube's outer geometry between where it begins to taper inward at the left side and where it begins to taper inward at the right side. Tapering refers to the gradual narrowing of the tube. In the context of the design, when the tube starts to taper inward, this marks the beginning of the midsection. The point where the tube is its thickest, which can be seen as the point of least taper or maximum diameter, also falls within the midsection. The midsection is located centrally in the tube's design, between the leading (front) and trailing (back) sides.

The shape has an elongated midsection. "Elongation" here refers to the length or stretch of the midsection, implying that midsection is more extended or prolonged.

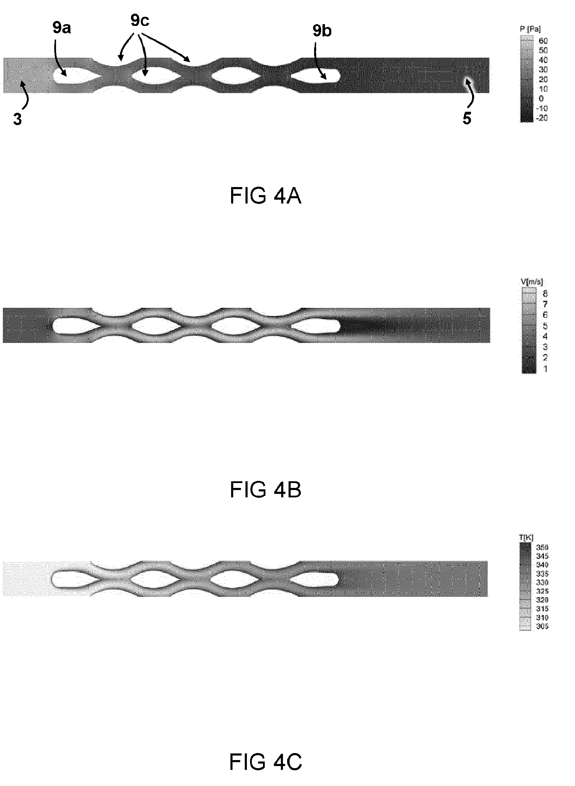

Fig. 4a-c show a schematic diagram of an exemplary performance analysis for an interior design of a tubular heat exchanger. Computational fluid dynamics (CFD) simulations were performed taking into account thermal modelling. Fig. 4a, 4b, 4c show pressure, velocity and temperature maps, respectively. Only a portion of the heat exchanger interior with tubes has been simulated for the sake of efficiency. Also 2D simulations have been performed.

The tubes 9a of the first set S1 have an elongated body that commences with a semi-elliptical curve on its leftmost extremity, said semi-ellipse having a predominantly extended vertical axis relative to its horizontal axis. Following the semi-elliptical curve, there is a relatively straight portion. The body presents a distinct straight portion, comprised of two separate straight line segments that originate from the termination points of the semi-elliptical curve and extend rightward, each maintaining a consistently straight path over its length. Subsequent to the straight portion, these line segments begin to approach each other in a converging trajectory, demonstrating a tapering nature. This tapering continues until the segments intersect, forming an angle less than 90 degrees between them, resulting in a sharply defined pointed terminus located at the rightmost boundary of the body.

The tubes 9b of the second set S2 have a similar but different shape compared to that of the tubes 9a of the first set S1. The tubes 9b of the second set S2 are more elongated. However, in some examples, the same design may be used for both.

In some examples, a unique design characteristic becomes evident for the tubes belonging to the first and second sets. Specifically, the midsections of these tubes are characterized by a predominantly flat contour. The choice to adopt such a flat design for these midsections carries inherent advantages for the overall functioning of the heat exchanger. One primary benefit of this design lies in the ability to ensure a steady and undisturbed flow of the heat exchange medium. By eliminating any significant curvatures in the midsections, the potential for flow disruptions, often induced by abrupt geometrical changes, can be considerably reduced. Such disruptions can lead to inconsistent heat transfer rates and reduced efficiency. Conversely, a flat midsection design fosters a more smooth flow of the medium, which is important for maintaining consistent thermal interactions between the medium and the tube surfaces. The immediate technical effect of this design choice is a more uniform heat transfer process, free from the pitfalls of erratic flow patterns or heat exchange dead zones. As a direct consequence, the tubular heat exchanger benefits from enhanced heat transfer capabilities, translating to elevated operational efficiency.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to `only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A tubular heat exchanger comprising:
an inlet portion and an outlet portion defining a flow direction therebetween;
a plurality of thermal transfer tubes arranged between the inlet portion and the outlet portion, wherein the plurality of thermal transfer tubes extend along an axial path, wherein the plurality of thermal transfer tubes are arranged in a staggered pattern in which every other row of thermal transfer tubes is offset from rows adjacent to it;
wherein a first set of thermal transfer tubes is provided at a leading end, a second set of thermal transfer tubes is provided at a trailing end, and a third set of thermal transfer tubes is provided at positions located between tubes of the first and second set;
wherein, in a cross-sectional view along a transverse or angled plane relative to the axial path, tubes of the first set have an elongated shape with a first midsection, and a first front and back section both contiguous with the first midsection, wherein the first front section and first back section start at a location where the tube begins to taper inward and extend to respective outermost points of the tube, wherein the first midsection, first front section and first back section are smoothly connected to form a continuous outer boundary of the tubes of the first set, wherein the first front and back section both exhibit a convex curvature, wherein the first front section has a first degree of tapering, and the first back section has a second degree of tapering, wherein the first degree of tapering is larger than the second degree of tapering, such that the first front section narrows more sharply relative to the first back section;
wherein, in a cross-sectional view along a transverse or angled plane relative to the axial path, tubes of the second set have an elongated shape with a second midsection, and a second front and back section both contiguous with the second midsection, wherein the second front section and second back section start at a location where the tube begins to taper inward and extend to respective outermost points of the tube, wherein the second midsection, second front section and second back section are smoothly connected to form a continuous outer boundary of the tubes of the second set, wherein the second front and back section both exhibit a convex curvature, wherein the second back section has a third degree of tapering, and the second front section has a fourth degree of tapering, wherein the third degree of tapering is larger than the fourth degree of tapering, such that the back section narrows more sharply relative to the front section; and
wherein, in a cross-sectional view along a transverse or angled plane relative to the axial path, tubes of the third set have an elongated shape that is distinct from the shape of the tubes of the first and second set of tubes.

2. The tubular heat exchanger of claim 1, wherein, in a cross-sectional view along a transverse or angled plane relative to the axial path, tubes of the third set only have a third front section and a third back section contiguous with each other.

3. The tubular heat exchanger of claim 1, wherein, in a cross-sectional view along a transverse or angled plane relative to the axial path, tubes of the third set have an elongated shape with a third midsection, and a third front and back section both contiguous with the third midsection, wherein the third front section and third back section start at a location where the tube begins to taper inward and extend to respective outermost points of the tube, wherein the third midsection, third front section and third back section are smoothly connected to form a continuous outer boundary of the tubes of the third set, wherein the third front and back section both exhibit a convex curvature, and wherein the third front section and third back section start at a location where the tube begins to taper inward and extend to respective outermost points of the tube.

4. The tubular heat exchanger of claim 3, wherein the first and second midsection have a substantially lower convexity with respect to that of the third midsection.

5. The tubular heat exchanger of any one of the preceding claims, wherein the first and second midsection is substantially flat.

6. The tubular heat exchanger of claims 3-5, wherein the third midsection has a curved portion.

7. The tubular heat exchanger of any one of the preceding claims, wherein the first midsection and the second midsection each extend over a range of 20 to 60 percent of the total length of their respective tubes.

8. The tubular heat exchanger of any one of the preceding claims, wherein the first midsection and the second midsection each extend over a range of 30 to 50 percent of the total length of their respective tubes.

9. The tubular heat exchanger of any one of the preceding claims 3-8, wherein the third midsection extends over a range of 0.5 to 20 percent of the total length of the respective tubes, preferably over a range of 1 to 10 percent.

10. The tubular heat exchanger of any one of the preceding claims, wherein the first and third degree of tapering are substantially the same, and wherein the second and fourth degree of tapering are substantially the same.

11. The tubular heat exchanger of any one of the preceding claims, wherein tubes of the first and second set have substantially the same geometric configuration, and wherein the tubes of the second set are arranged in a mirrored configuration relative to the tubes of the first set.

12. The tubular heat exchanger of any one of the preceding claims, wherein the first back section and the second front section have a pointed end.

13. The tubular heat exchanger of any one of the preceding claims, wherein the first back section and the second front section have a rounded end.

14. The tubular heat exchanger of any one of the preceding claims, wherein each tube exhibits a curvature that is symmetric about a central chord line.

15. A method of arranging a tubular heat exchanger, the method including the steps of:
providing an inlet portion and an outlet portion that define a flow direction therebetween;
providing a plurality of thermal transfer tubes arranged between the inlet portion and the outlet portion, wherein the plurality of thermal transfer tubes extend along an axial path, wherein the plurality of thermal transfer tubes are arranged in a staggered pattern in which every other row of thermal transfer tubes is offset from rows adjacent to it;
wherein a first set of thermal transfer tubes is provided at a leading end, a second set of thermal transfer tubes is provided at a trailing end, and a third set of thermal transfer tubes is provided at positions located between tubes of the first and second set;
wherein, in a cross-sectional view along a transverse or angled plane relative to the axial path, tubes of the first set have an elongated shape with a first midsection, and a first front and back section both contiguous with the first midsection, wherein the first front section and first back section start at a location where the tube begins to taper inward and extend to respective outermost points of the tube, wherein the first midsection, first front section and first back section are smoothly connected to form a continuous outer boundary of the tubes of the first set, wherein the first front and back section both exhibit a convex curvature, wherein the first front section has a first degree of tapering, and the first back section has a second degree of tapering, wherein the first degree of tapering is larger than the second degree of tapering, such that the first front section narrows more sharply relative to the first back section;
wherein, in a cross-sectional view along a transverse or angled plane relative to the axial path, tubes of the second set have an elongated shape with a second midsection, and a second front and back section both contiguous with the second midsection, wherein the second front section and second back section start at a location where the tube begins to taper inward and extend to respective outermost points of the tube, wherein the second midsection, second front section and second back section are smoothly connected to form a continuous outer boundary of the tubes of the second set, wherein the second front and back section both exhibit a convex curvature, wherein the second back section has a third degree of tapering, and the second front section has a fourth degree of tapering, wherein the third degree of tapering is larger than the fourth degree of tapering, such that the back section narrows more sharply relative to the front section; and wherein, in a cross-sectional view along a transverse or angled plane relative to the axial path, tubes of the third set have an elongated shape that is distinct from the shape of the tubes of the first and second set of tubes.
